(19) Europäisches Patentamt
European Patent Office
Office européen des brevets

(11) **EP 2 631 614 A1**

(12) **EUROPEAN PATENT APPLICATION**
published in accordance with Art. 153(4) EPC

(43) Date of publication:
**28.08.2013 Bulletin 2013/35**

(51) Int Cl.:
**G01G 19/08** (2006.01)    **G01G 19/02** (2006.01)

(21) Application number: **11834532.1**

(22) Date of filing: **22.07.2011**

(86) International application number:
**PCT/KR2011/005416**

(87) International publication number:
**WO 2012/053732 (26.04.2012 Gazette 2012/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2010 KR 20100138269**
**18.10.2010 KR 20100101570**

(71) Applicant: **Hawes And T Co. Ltd**
**Gyeonggi-do 429-450 (KR)**

(72) Inventors:
• **KIM, Chang Yong**
  **Seoul 140-868 (KR)**
• **LEE, Jun Ho**
  **Incheon 403-811 (KR)**
• **MA, Sang Jun**
  **Incheon 405-220 (KR)**

(74) Representative: **Ter Meer Steinmeister & Partner Patentanwälte**
**Mauerkircherstrasse 45**
**81675 München (DE)**

(54)    **TRAVELLING VEHICLE WEIGHT MEASUREMENT DEVICE AND MEASUREMENT ALGORITHM**

(57)    The present invention relates to a device and an algorithm for measuring weight of an operating vehicle, and the weight of the vehicle is measured using data acquired through a variety of sensors of the vehicle, and the operating vehicle weight measurement device includes a connector unit for receiving the vehicle data through a data cable connected to a DLC of the vehicle; a control unit provided with a microprocessor for operating and processing the data input through the connector unit; a display unit for outputting information input into the control unit and a software version on a screen; a software setting unit for inputting base information on the vehicle and updating and controlling logic; a Bluetooth or WiFi transmission unit connected to a wireless communication module to transmit data output from the control unit and to receive data from outside; a flash memory unit for storing data collected in the control unit and a result of operation; a tilt sensor connector unit for receiving data through a tilt sensor which measures a gradient of a road and transferring the data to the control unit; and a warning unit for recognizing an error in the data input into or output from the control unit or an operation error.

[Fig. 1]

EP 2 631 614 A1

**Description**

**BACKGROUND OF THE INVENTION**

**Field of the Invention**

The present invention relates to a device and algorithm for measuring weight of an operating vehicle, and more specifically, to a device and algorithm for measuring weight of an operating vehicle, in which sensor data of the vehicle is acquired from a Data Link Connector (DLC) of the vehicle, and current weight and load weight of the vehicle are calculated in real-time by applying the data to a measurement algorithm.

**Background of the Related Art**

Generally, operation of an overloaded vehicle is a factor of damaging a road or bridge structure, and it may lower durability of the road and increase maintenance cost thereof.

In addition, since driving performance of the overloaded vehicle is relatively inferior, it decreases capacity of a corresponding road and acts as a factor of deteriorating the environment around the road since the overloaded vehicle generates noises and vibrations and discharges exhaustion gas while driving.

Meanwhile, traffic accidents of large trucks on the roads and highways caused by speeding, overload and violent driving of the trucks are extremely serious across the nation, and as logistics and distribution activities are increased recently with the progress in economy, operations of the large freight trucks are also increased greatly, and traffic accidents also tend to increase accordingly.

In addition, various traffic systems for measuring traffic parameters, weight of a vehicle and height of loads and informing drivers of the measured data so as to secure safe drive are proposed in order to prevent traffic accidents of the large freight trucks.

Here, measuring the traffic parameters and vehicle weight means examining specifications and weight of vehicles passing through a specific point, by vehicle type, among the vehicles driving on the road, and examining weight of vehicles means examining distribution of weight of vehicles passing through the specific point, by vehicle type, based on time.

That is, the traffic parameters include a vehicle speed, a wheel base, a tread, a traffic volume, an occupation time and the like of each vehicle type based on time, and examination of weight of vehicles may include examination of distribution of axle weight and total weight of a vehicle for each vehicle type, an overload rate of each vehicle type, distribution of overloaded vehicles by time, an equivalent single axle load, major moving routes of overloaded vehicles and the like.

In addition, the examination of weight of vehicles has an important function of providing base information such as design and maintenance of road pavement, control of overloaded vehicles, establishment of standards for restricting operation of trucks, policy sector and the like.

However, although the data measured on the traffic parameters and vehicle weight are used as important base information for establishing transportation policies, a system for applying the base information to induce safe drive of freight vehicles has not been proposed yet.

**SUMMARY OF THE INVENTION**

Therefore, the present invention has been made in view of the above problems, and it is an object of the present invention to collect load weight data so as to monitor load weight of a vehicle.

In addition, another object of the present invention is to acquire sensor data of a vehicle from a DLC of the vehicle to calculate total weight of the vehicle in real-time and measure load weight of the vehicle.

Meanwhile, the present invention has been made in view of the above problems, and it is an object of the present invention to provide an operating vehicle weight measurement device which can acquire sensor data of a vehicle from a DLC of the vehicle and calculate current weight and load weight of the vehicle in real-time while it can be easily mounted on or dismounted from the vehicle.

In addition, another object of the present invention is to configure an operating vehicle weight measurement device to have a low height so as to minimize a mounting space and utilize an existing space.

In addition, another object of the present invention is to provide an improve coupler so that a case configuring the operating vehicle weight measurement device may not be easily separated.

In order to achieve the aforementioned objects, load weight of an operating vehicle is measured using data acquired through a variety of sensors of the vehicle, and an operating vehicle weight measurement device includes: a connector unit for receiving the vehicle data through a data cable connected to a DLC of the vehicle; a control unit provided with a microprocessor for operating and processing the data input through the connector unit; a display unit for outputting information input into the control unit and a software version on a screen; a software setting unit for inputting base information on the vehicle and updating and controlling logic; a Bluetooth or WiFi transmission unit connected to a wireless communication module to transmit data output from the control unit and to receive data from outside; a flash memory unit for storing data collected in the control unit and a result of operation; a tilt sensor connector unit for receiving data through a tilt sensor which measures a gradient of a road and transferring the data to the control unit; and a warning unit for recognizing an error in the data input into or output from the control unit or an operation error.

In addition, an operating vehicle weight measurement algorithm includes: a data acquisition step of acquiring data through the operating vehicle weight measurement device; a driving force calculation step of calculating a driving force of an operating vehicle using the data acquired through the data acquisition step; a total running resistance calculation step of calculating a variety of resistances generated when the operating vehicle drives, using the data acquired through the data acquisition step; and a vehicle weight calculation step of calculating a weight of the operating vehicle using the data obtained through the driving force calculation step and the total running resistance calculation step.

In addition, the operating vehicle weight measurement device includes: a lower case including a lower inclined section on a front side and an accommodation space inside thereof; an upper case coupled on a top of the lower case, wherein an upper inclined section having a mounting groove is formed on a front side, and mounting protrusion units for fixedly mounting the operating vehicle weight measurement device on the vehicle are prominently formed on a top surface to be spaced apart from each other in a length direction; a PCB board horizontally mounted in the accommodation space of the lower case, wherein PCB connection units are formed at both sides, and components for performing a measurement function are mounted on top and bottom surfaces; a display unit mounted on the mounting groove of the upper case, connected to the PCB board, and displaying input and transfer information; and a handling unit mounted on the upper inclined section of the upper case, connected to the PCB board, and controlling input of vehicle information and update of logic.

## BRIEF DESCRIPTION OF THE DRAWINGS

FIG. 1 is a block diagram showing the configuration of an operating vehicle weight measurement device according to the present invention.

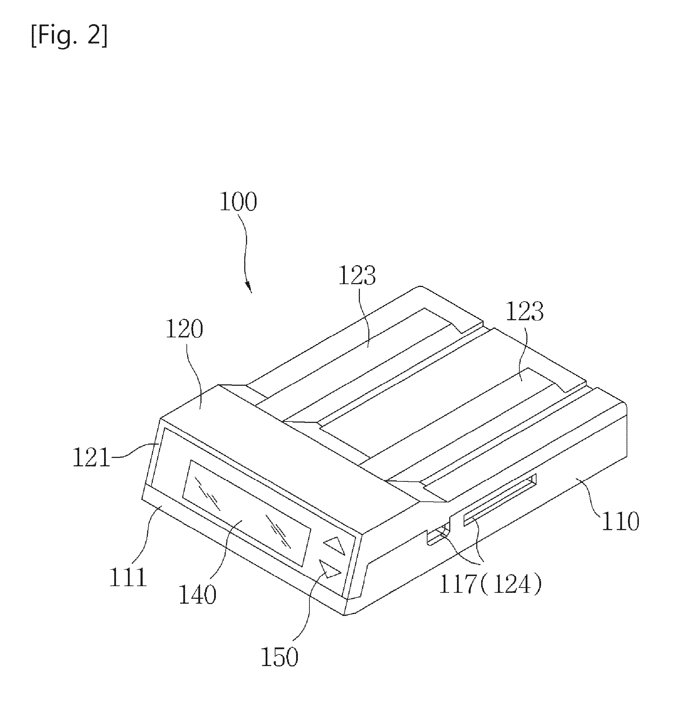

FIG. 2 is a perspective view showing an operating vehicle weight measurement device according to the present invention.

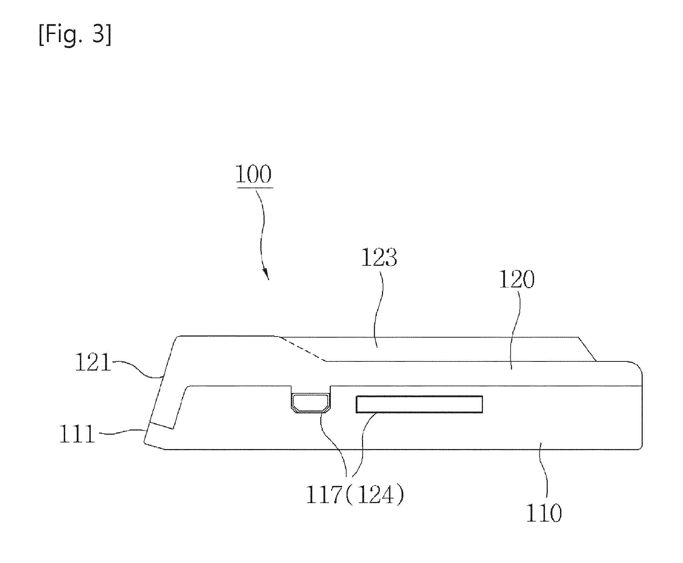

FIG. 3 is a side view showing an operating vehicle weight measurement device according to the present invention.

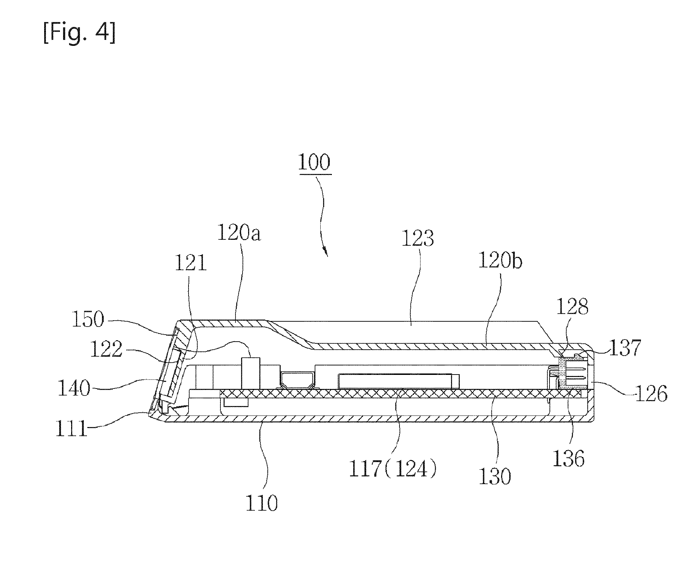

FIG. 4 is a cross-sectional view showing an operating vehicle weight measurement device according to the present invention.

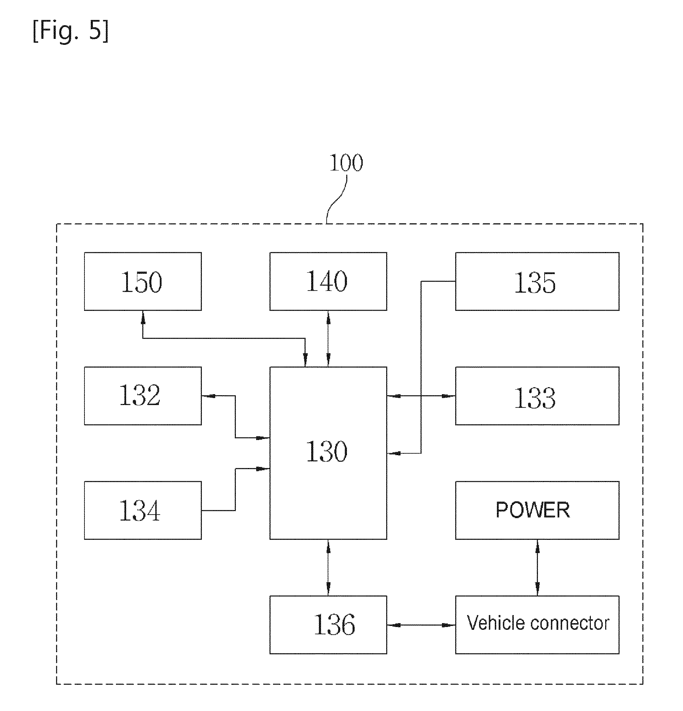

FIG. 5 is a view showing the configuration of an operating vehicle weight measurement device according to the present invention.

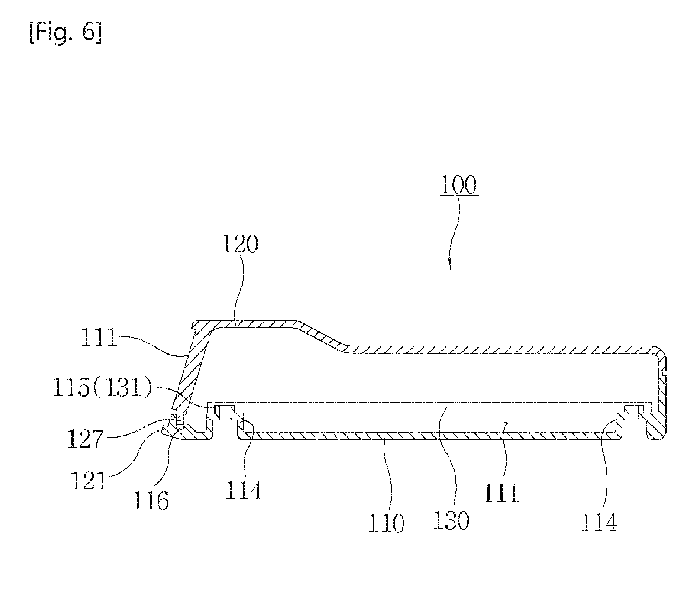

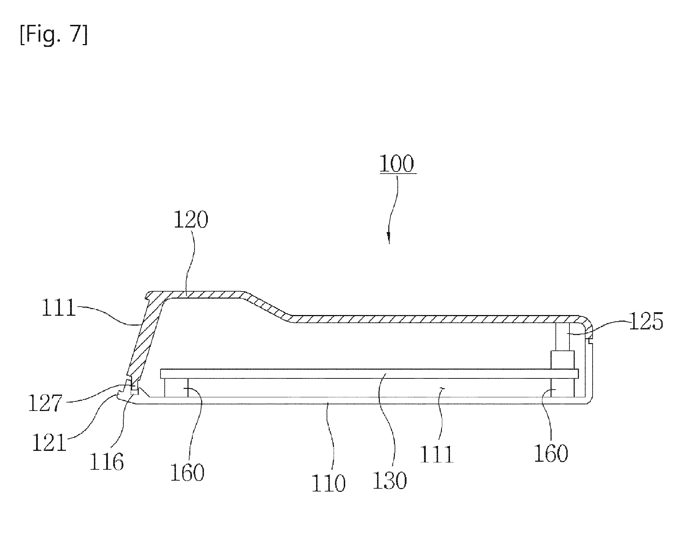

FIGs. 6 and 7 are cross-sectional views schematically showing a coupling state of a case and a PCB board configuring an operating vehicle weight measurement device according to the present invention.

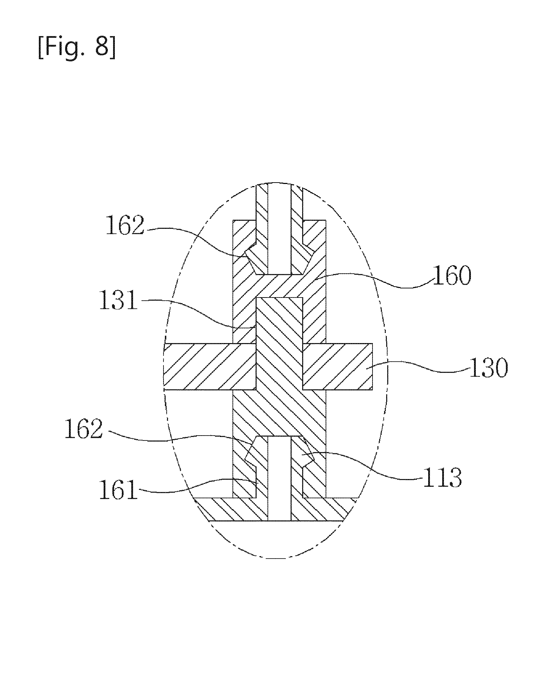

FIG. 8 is an exploded cross-sectional view showing a major portion of FIG. 7 according to the present invention.

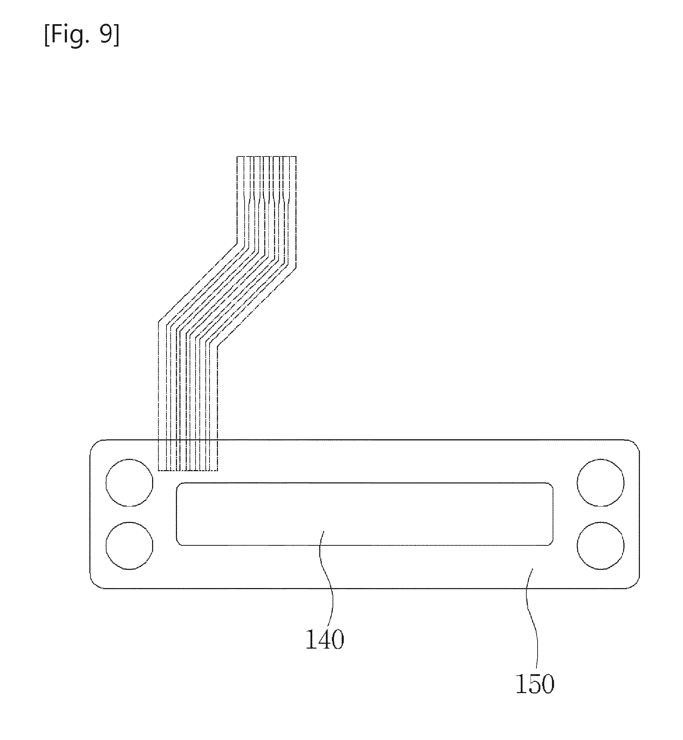

FIG. 9 is a view showing the configuration of a display unit and a handling unit configuring an operating vehicle weight measurement device according to the present invention.

## DETAILED DESCRIPTION OF THE PREFERRED EMBODIMENT

In order to achieve the aforementioned objects, load weight of an operating vehicle is measured using data acquired through a variety of sensors of the vehicle, and an operating vehicle weight measurement device includes: a connector unit for receiving the vehicle data through a data cable connected to a DLC of the vehicle; a control unit provided with a microprocessor for operating and processing the data input through the connector unit; a display unit for outputting information input into the control unit and a software version on a screen; a software setting unit for inputting base information on the vehicle and updating and controlling logic; a Bluetooth or WiFi transmission unit connected to a wireless communication module to transmit data output from the control unit and to receive data from outside; a flash memory unit for storing data collected in the control unit and a result of operation; a tilt sensor connector unit for receiving data through a tilt sensor which measures a gradient of a road and transferring the data to the control unit; and a warning unit for recognizing an error in the data input into or output from the control unit or an operation error.

In addition, an operating vehicle weight measurement algorithm includes: a data acquisition step of acquiring data through the operating vehicle weight measurement device; a driving force calculation step of calculating a driving force of an operating vehicle using the data acquired through the data acquisition step; a total running resistance calculation step of calculating a variety of resistances generated when the operating vehicle drives, using the data acquired through the data acquisition step; and a vehicle weight calculation step of calculating a weight of the operating vehicle using the data obtained through the driving force calculation step and the total running resistance calculation step.

In addition, the operating vehicle weight measurement device includes: a lower case including a lower inclined section on a front side and an accommodation space inside thereof; an upper case coupled on a top of the lower case, wherein an upper inclined section having a mounting groove is formed on a front side, and mounting protrusion units for fixedly mounting the operating vehicle weight measurement device on the vehicle are prominently formed on a top surface to be spaced apart from each other in a length direction; a PCB board horizontally mounted in the accommodation space of the lower case, wherein PCB connection units are formed at both sides, and components for performing a measurement function are mounted on top and bottom surfaces; a display unit mounted on the mounting groove of the upper case, connected to the PCB board, and displaying input and transfer information; and a handling unit mounted on the upper inclined section of the upper case, connected to the PCB board, and controlling input of vehicle information and update of logic.

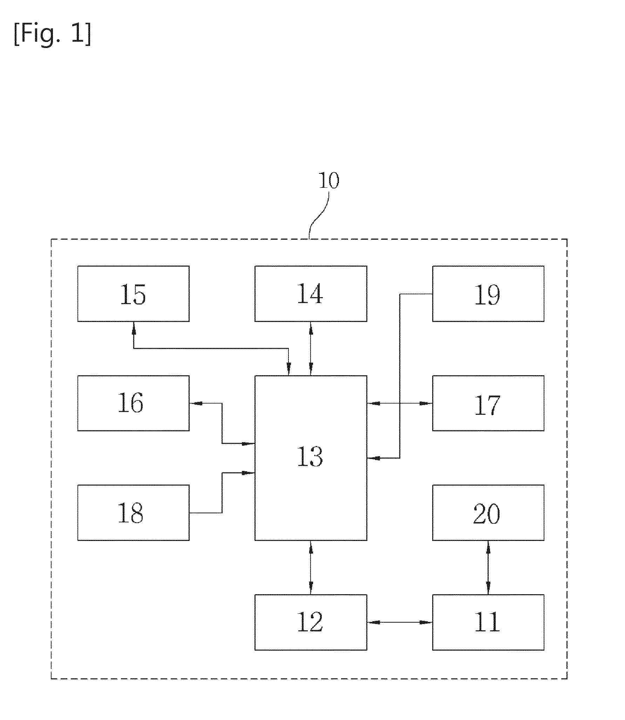

Hereinafter, the configuration of the present invention is described with reference to the attached drawings, and FIG. 1 is a block diagram showing the configuration of an operating vehicle weight measurement device according to the present invention.

The operating vehicle weight measurement device 10 of the present invention includes a connector unit 12 for receiving the vehicle data through a data cable connected to a DLC 11 of the vehicle; a control unit 13 provided with a microprocessor for operating and processing the data input through the connector unit 12; a display unit 14 for outputting information input into the control unit 13 and a software version on a screen; a software setting unit 15 for inputting base information on the vehicle and updating and controlling logic; a Bluetooth or WiFi transmission unit 16 connected to a wireless communication module to transmit data output from the control unit 13 and to receive data from outside; a flash memory unit 17 for storing data collected in the control unit 13 and a result of operation; a tilt sensor connector unit 18 for receiving data through a tilt sensor which measures a gradient of a road and transferring the data to the control unit 13; and a warning unit 19 for recognizing an error in the data input into or output from the control unit 13 or an operation error.

Then, the connector unit 12 receives data of the vehicle through a data cable connected to the DLC 11 which diagnoses the vehicle, and the vehicle data is transmitted from the DLC 11 to the connector unit 12 using the power received from a power supply unit 20.

Here, On-Board Diagnosis (OBD) is applied to a scanner, and describing in further detail, the OBD is one of regulations related to vehicle exhaust gas in USA, which is an act established to store a diagnostic trouble code (DTC) and illuminate a malfunction indicator light (MIL) when an exhaust gas control device or system is diagnosed using a computer embedded in the vehicle while the vehicle is operating and it is determined as being out of order.

Then, the data transferred to the connector unit 12 through the DLC 11 of the vehicle is transmitted in a CAN or K-Line method using a vehicle trouble diagnostic standard protocol.

Here, the data transmission is accomplished through the CAN or K-Line using a vehicle trouble diagnostic standard protocol of ISO9141-2 or KWP2000.

Describing in further detail, the ISO9141-2 and KWP2000 are vehicle trouble diagnostic standard protocols specified by International Organization for Standardization (ISO) and Society of Automotive Engineers (SAE). The Controller Area Network (CAN) is a network communication scheme that can be used in a small range, which is a next-generation vehicle diagnostic communication scheme having a speed of 500Kbps to 1Mbps that is faster than an existing communication speed by 50 times or more, and K-Line is a vehicle diagnostic communication line named by the regulation of OBD and has a speed of 10.4Kbps.

The control unit 14 provided with a microprocessor operates and processes the data input through the connector unit 120 using previously stored information and programs, and the data processed by the control unit 14 is temporarily stored as a file in the flash memory unit 17 provided with memory, and management of load weight data of the vehicle can be performed based on the file.

In addition, the vehicle data acquired while operating the vehicle and stored in the flash memory unit 17 as a file is downloaded through the Bluetooth or WiFi transmission unit 16 in the form of a file.

At this point, it is revealed that a USB IF unit is further installed instead of the Bluetooth or WiFi transmission unit 16 to download the data stored in the flash memory unit 19 as a file.

In addition, the tilt sensor connector unit 18 receives an input value acquired through a tilt sensor which measures a gradient of a road, operates and processes the data by comparing with a stored value, and transfers the processed data to the control unit 13.

In addition, the warning unit 19 allows a worker to recognize a data error input and output to the control unit 13 through an alarm or a warning sound.

Next, when it is desired to obtain the weight and load weight of the vehicle using the data measured and collected by the operating vehicle weight measurement device described above, an operation process described below needs to be performed.

That is, the operating vehicle weight measurement algorithm includes a data acquisition step of acquiring data through the operating vehicle weight measurement device, a driving force calculation step of calculating a driving force of the vehicle using the data acquired through the data acquisition step, a total running resistance calculation step of calculating a variety of resistances generated when the vehicle drives, using the data acquired through the data acquisition step, and a vehicle weight calculation step of calculating a weight of the vehicle using the data obtained through the driving force calculation step and the total running resistance calculation step.

Here, an operation state of the vehicle may be confirmed based on a variety of data transferred through the DLC, and vehicle speed, revolutions of an engine, fuel consumption, an operation state of an air conditioner, shaft power and the like of the vehicle can be confirmed through the connection to the DLC. A rolling resistance coefficient, an air resistance coefficient and a total projection area may be confirmed using constant values unique to the vehicle, and a gradient of a road may be confirmed using a tilt sensor (a gyro sensor or an acceleration sensor).

The driving force calculation step of calculating a force P for driving forward a vehicle on a road using the data acquired through the data acquisition step is described below.

First, a new equation 3 for calculating a driving force of a vehicle is obtained by putting equation 2 for calculating a vehicle speed into an existing equation 1 for calculating a driving force.

$$\text{(Equation 1)}$$

$$P = (I_s \times I_f \times T \times \eta)/r \ (\text{kg}_f)$$

$$\text{(Equation 2)}$$

$$V = (2\pi r \times n \times 60)/(I_s \times I_f \times 1000) \ (\text{km/h})$$

$$\text{(Equation 3)}$$

$$P = (2\pi \times n \times 60 \times T \times \eta)/(V \times 1000) = (0.38 \times n \times T \times \eta)/V \ (\text{kg}_f)$$

In the above equations, $I_s$ denotes a gear ratio of a transmission in each gear stage, $I_f$ denotes a final reduction gear ratio of a transmission, T denotes an engine torque ($\text{kg}_f \cdot \text{m}$), $\eta$ denotes power transmission efficiency (a general value of 0.95 is used in the above equations, and there is a small difference depending on a vehicle type), r denotes a dynamic loaded radius of a tire (m), n is 3.14, and n denotes revolutions of an engine (rpm), and in the equation 3, V (vehicle speed) and n (the number of engines) are confirmed by a signal value transferred through the DLC.

Then, data on the engine torque T may be obtained in real-time through the DLC in the case of some vehicle types, and when the data cannot be obtained through the DLC, it is obtained through equation 11.

$$\text{(Equation 11)}$$

$$T = \{25290 \times \eta_h \times q \times (0.95 \text{ when an air conditioner is in operation, or } 1.00 \text{ when the air conditioner is not in operation}) \times (\text{the number of data measured per second})\}/n \ (\text{kg}_f \cdot \text{m})$$

In equation 11, $\eta_h$ denotes thermal efficiency of an engine, and q denotes fuel consumption (cc).

In Korea, it is calculated such that the diesel is 35.321J/cc and the gasoline is 30,932J/cc. (Clause 1, Article 5 of Enforcement Regulations of Framework Act on Energy)

At this point, 0.35 is applied as the thermal efficiency of an engine $\eta_h$ in the case of a diesel engine, and 0.3 is applied in the case of a gasoline engine (the thermal efficiency of an engine varies depending on an engine type). In addition, depending on the operation of an air conditioner of the vehicle, 0.95 is applied when the air conditioner is in operation (there is a small difference in loss of power depending on a vehicle type when the air conditioner is in operation), and 1 is applied when the air conditioner is not in operation.

Next, the total running resistance calculation step of calculating a variety of resistances generated when a vehicle drives is described below.

First, a rolling resistance generated by the friction between a road surface and a tire is calculated using equation 4.

$$(\text{Equation 4})$$

$$R_r = \mu_r \times W \ (\text{kg}_f)$$

Second, an air resistance generated by the shape of a vehicle and friction of air is calculated using equation 5.

$$(\text{Equation 5})$$

$$R_r = \{\mu_a \times A \times (V/3.6)^2\}/9.81 = 0.0079 \times \mu_a \times A \times V^2$$

$$(\text{kg}_f)$$

Third, a gradient resistance generated by the gradient of a road is calculated using equation 6.

$$(\text{Equation 6})$$

$$R_g = Sin\theta \times W \ (\text{kg}_f)$$

Fourth, an acceleration resistance generated when a vehicle accelerates is calculated using equation 7.

$$(\text{Equation 7})$$

$$R_i = (a/g) \times W \times (1+\varepsilon) \ (\text{kg}_f)$$

Fifth, equation 8 for calculating a new total running resistance $R_T$ by adding the rolling resistance, the air resistance, the gradient resistance and the acceleration resistance is obtained.

$$(\text{Equation 8})$$

$$R_T = R_r + R_a + R_g + R_i \ (\text{kg}_f) = (\mu_r \times W) + (0.0079 \times \mu_a \times A \times V^2) + (Sin\theta \times W) + (a/g) \times W \times (1+\varepsilon) \ (\text{kg}_f)$$

In the equations described above, $\mu_r$ denotes a rolling resistance coefficient, W denotes a weight of a vehicle (kg$_f$), $\mu_a$ denotes an air resistance coefficient (kg/m$^3$), A denotes a total projection area of a vehicle (m$^2$), sin$\theta$ denotes a gradient of a road measured using a gyro sensor, a denotes acceleration of a vehicle (m/s$^2$), g denotes acceleration of gravity (9.81m/s$^2$), and $\varepsilon$ denotes an equivalent weight ratio of a rotating part.

Here, when the vehicle drives on a horizontal surface of a road without a gradient, the total running resistance is calculated to exclude the gradient resistance.

Next, the vehicle weight calculation step of calculating weight of a vehicle using the data obtained through the driving force calculation step and the total running resistance calculation step is described below.

At this point, the driving force P and the total running resistance R$_T$ are calculated using equation 9 in which the driving force of the vehicle and the total rolling resistance are calculated always to be equal.

That is, if the driving force P is larger than the sum of the rolling resistance, the air resistance and the gradient resistance when a vehicle drive, the acceleration resistance is generated since the acceleration is larger than '0', and if the driving force P is equal to the sum of the rolling resistance, the air resistance and the gradient resistance, the acceleration resistance disappears since the acceleration is '0'.

$$(\text{Equation } 9)$$

$$P = R_T$$

$$(0.38 \times n \times T \times \eta)/V = (\mu_r \times W) + (0.0079 \times \mu_a \times A \times V^2)$$
$$+ (\text{Sin}\theta \times W) + (a/g) \times W \times (1+\varepsilon) \ (kg_f)$$

Next, equation 10 is obtained by substituting equation 9 to exclude the weight W of a vehicle, and thus the weight W of a vehicle can be obtained.

$$(\text{Equation } 10)$$

$$W = \{(0.358 \times n \times T) - (0.0079 \times \mu_a \times A \times V^3)\}/\{(\mu_r \times V)$$
$$+ (\text{Sin}\theta \times V) + (0.105 \times a \times V)\} \ (kg_f)$$

Although it is calculated using 0.03 as $\varepsilon$ in equation 10, it is revealed that this may vary depending on a vehicle type.

At this point, when the vehicle uses an automatic transmission, the weight W of the vehicle is calculated using equation 12.

$$(\text{Equation } 12)$$

$$W = \{(0.358 \times n \times T \times \tau) - (0.0079 \times \mu_a \times A \times V^3)\}/\{(\mu_r$$
$$\times V) + (\text{Sin}\theta \times V) + (0.105 \times a \times V)\} \ (kg_f)$$

In the above equation, $\tau$ denotes a boosting force of a torque converter.

Then, the engine torque T is calculated using equation 11.

(Equation 11)

$$T = \{25290 \times \eta_h \times q \times (0.95 \text{ when an air conditioner is}$$

$$\text{in operation, or } 1.00 \text{ when the air conditioner is not in}$$

$$\text{operation}) \times (\text{the number of data measured per second})\}/n \ (kg_f \cdot m)$$

In equation 11, $\eta_h$ denotes thermal efficiency of an engine, and q denotes fuel consumption (cc).

At this point, 0.35 is applied as the thermal efficiency of an engine $\eta_h$ in the case of a diesel engine, and 0.3 is applied in the case of a gasoline engine (the thermal efficiency of an engine varies depending on an engine type). In addition, depending on the operation of an air conditioner of the vehicle, 0.95 is applied when the air conditioner is in operation, and 1.00 is applied when the air conditioner is not in operation.

If the volume of freight flow and information on operation of empty vehicles are analyzed through the operating vehicle weight measurement device and algorithm, freight vehicles can be efficiently operated, and through this, emission of greenhouse gas and consumption of fuel can be decreased by reducing the moving distance per unit freight.

On the other hand, an operating vehicle weight measurement device 100 according to another aspect of the present invention includes cases 110 and 120 combined up and down to each other, a PCB board 130 mounted inside the cases 110 and 120, and a display unit 140 and a handling unit 150 installed on the front side of the cases 110 and 120.

A lower case 110 includes a lower inclined section 111 on the front side and an accommodation space 112 inside thereof.

An upper case 120 is coupled on the top of the lower case 110, in which an upper inclined section 121 having a mounting groove 122 is formed on the front side, and mounting protrusion units 123 for fixedly mounting the operating vehicle weight measurement device on the vehicle are prominently formed on the top surface to be spaced apart from each other in the length direction.

That is, the upper case 120 includes the mounting groove 122 formed in the middle of the upper inclined section 121 toward the accommodation space 112 and the mounting protrusion units 123 formed on the top surface to fix the operating vehicle weight measurement device to the vehicle by sliding insertion.

Here, in the upper case 120, a front top surface 120a having a horizontal surface for smoothly mounting the operating vehicle weight measurement device on the vehicle and a rear top surface 120b having a horizontal surface and the mounting protrusion units 123 thereon are formed to have a step difference.

At this point, the mounting protrusion units 123 of the rear top surface 120b are formed to have an upper end that is as high as or lower than the front top surface 120a, and this is to prevent excessive insertion of the device when the device is slidingly mounted on the vehicle.

Then, either an insertion coupling structure or a method of using an adhesive is selected to couple the lower case 110 and the upper case 120, and the insertion coupling structure will be described as an example in the application of the present invention.

That is, a coupling depression 116 is form at one side of a contacting point between the lower inclined section 111 and the upper inclined section 121, and a coupling projection 127 is formed at an opposite side corresponding to the coupling depression 116, and the coupling projection 127 is inserted into the coupling depression 116.

The PCB board 130 is horizontally mounted in the accommodation space 112 of the lower case 110, in which PCB connection units 131 are formed at both sides, and components for performing a measurement function are mounted on the top and bottom surfaces.

Then, it is revealed that the PCB board 130 may selectively further include a transmission unit 132 for transmitting or inputting output data, a flash memory unit 133 for storing collected data and an operation result, a tilt sensor connector unit 134 for receiving data through a tilt sensor which measures a gradient of a road, and a warning unit 135 for recognizing an error in the input or output data or an operation error.

At this point, connection mounting grooves 117 and 124 are further formed in the cases 110 and 120 so that a selected configuration may be connectedly mounted on the PCB board 130.

The display unit 140 mounted on the mounting groove 122 of the upper case 120 is connected to the PCB board 130 and displays input and transfer information, and the handling unit 150 mounted on the upper inclined section 121 of the upper case 120 is connected to the PCB board 130 and controls input of vehicle information and update of logic.

That is, the display unit 140 is inserted into the mounting groove 122 and displays information transferred from the PCB board 130 and input information, and the handling unit 150 allows a user to handle the operating vehicle weight measurement device while confirming the information displayed on the display unit 140 with eyes.

Here, the display unit 140 and the handling unit 150 are formed by selecting one of techniques publicized in the prior art, and detailed descriptions thereof will be omitted.

Then, observing the coupling structure of the cases 110 and 120 and the PCB board 120, the PCB board 130 is insertedly coupled to the lower case 110, and the upper case 120 accommodates and fixes the PCB board 130.

That is, in the lower case 110, a location projection unit 114 is prominently formed at a position corresponding to the PCB connection unit 131 of the PCB board 130, and a connection projection 115 formed at the end point of the location projection unit 114 is inserted into the PCB connection unit 131. In the upper case 120, a reception unit 126 on the rear surface wraps and fixes a connector 136 positioned on the rear surface of the PCB board 130.

At this point, it is revealed that an engagement depression 128 and an engagement projection 137 are formed at a contacting point between the upper case 120 and the connector 136, and thus the upper case 120 and the connector 136 may be further firmly fixed to each other.

Next, it is revealed that fixtures 160 which are fixedly coupled to the lower case 110, the upper case 120 or the upper and lower cases 110 and 120 and adjusting the height of the PCB board 130 may be further included at the positions corresponding to the PCB connection units 131 of the PCB board 130.

Here, describing the coupling structure of the cases 110 and 120, the PCB board 130 and the fixture 160, the fixture 160 having fixture coupling holes 161 is detachably coupled to the PCB connection unit 131 of the PCB board 130, and fixing projections 113 and 125 insertedly coupled to the fixture coupling holes 161 are formed inside the cases 110 and 120 corresponding to the fixture 160.

The fixing projections 113 and 125 of the cases 110 and 120 are formed in the shape of an arrowhead and insertedly fixed to fixture coupling grooves 162 formed inside the fixture coupling holes 161.

An embodiment of the operating vehicle weight measurement device configured as described above is described below.

First, a lower case 110 includes a lower inclined section 111 on the front side and an accommodation space 112 inside thereof.

PCB connection units 131 are formed at both ends of the accommodation space 112 of the lower case 110, and a PCB board 130 provided with components for performing a measurement function on the top and bottom surfaces is fixedly installed.

That is, the PCB connection unit 131 of the PCB board 130 is inserted into a connection projection 115 of a location projection unit 114 configuring the lower case 110, and then the PCB board 130 is fixed to the lower case 110 by fastening a screw.

At this point, a transmission unit 132 for transmitting or inputting output data, a flash memory unit 133 for storing collected data and an operation result, a tilt sensor connector unit 134 for receiving data through a tilt sensor which measures a gradient of a road, and a warning unit 135 for recognizing an error in the input or output data or an operation error are mounted on the PCB board 130.

Next, an upper case 120 is mounted on the top of the lower case 110, in which an upper inclined section 121 having a mounting groove 122 is formed on the front side, and mounting protrusion units 123 for fixedly mounting the operating vehicle weight measurement device on the vehicle are prominently formed on the top surface to be spaced apart from each other in the length direction.

At this point, in the upper case 120, a reception unit 126 on the rear surface wraps and fixes a connector 136 positioned on the rear surface of the PCB board 130.

Then, if a handling unit 150 is mounted on the front side of a display unit 140 and the upper inclined section 121 after mounting the display unit 140 on the mounting groove 122 of the upper case 120, assembly of the operating vehicle weight measurement device 100 is completed.

Next, if the operating vehicle weight measurement device 100 is installed in an installation space of the vehicle, the installation process is completed. At this point, the operating vehicle weight measurement device 100 is slidingly inserted into the vehicle through the mounting protrusion units 123, and the connector 136 mounted on the PCB board 130 is coupled to a connector of the vehicle.

Here, it is revealed that the sequence of assembling and installing the operating vehicle weight measurement device may be different from the sequence described above.

In a state as described above, the operating vehicle weight measurement device 100 operates and processes the data input through the PCB board 130 connected to the connector of the vehicle using previously stored information and programs, and the data processed by a control unit is temporarily stored as a file in the flash memory unit 133 provided with memory, and management of load weight data of the vehicle is performed based on the file.

In addition, the vehicle data acquired while operating the vehicle and stored in the flash memory unit 133 as a file is downloaded through the Bluetooth or WiFi transmission unit 132 in the form of a file.

At this point, it is revealed that a USB IF unit is further installed instead of the Bluetooth or WiFi transmission unit 132 to download the data stored in the flash memory unit 133 as a file.

In addition, the tilt sensor connector unit 134 receives an input value acquired through a tilt sensor which measures a gradient of a road, operates and processes the data by comparing with a stored value, and transfers the processed data to the control unit.

In addition, a warning unit 135 allows a worker to recognize a data error input or output to the control unit through an alarm or a warning sound.

Next, information on the operating vehicle may be confirmed by displaying the data stored in the PCB board 130 through the display unit 140 (which can be replaced by the flash memory unit 133 or the transmission unit 132) under the control of the handling unit 150.

That is, through the control of the handling unit 150, it is possible to conform a model name of the operating vehicle weight measurement device 100, a vehicle identification number, a license plate number, a vehicle type, fuel consumption, fuel economy, a date and time, a daily driving distance, a load weight, daily driving hours, a Bluetooth transmission date and time, a fuel injection amount, a reset to "0" function of an acceleration sensor, an amount of CO2 emission and the like.

According to the present invention, sensor data of a vehicle can be acquired from a DLC of the vehicle, and total weight and load weight of the vehicle can be measured in real-time by applying the acquired data to the operating vehicle weight measurement algorithm.

Furthermore, load weight data of a vehicle is stored through the operating vehicle weight measurement device, and a driving distance, emission of greenhouse gas per volume of freight flow (ton) and consumption of fuel of a freight vehicle can be analyzed using the collected load weight data, and in addition, an effective freight transportation method of selecting a logistics hub site and reducing an empty load ratio can be developed based on the result of the analysis.

Furthermore, freight transportation cost can be lowered by decreasing fuel consumption, while reducing emission of greenhouse gas, through the effective freight transportation method.

Although a device and algorithm for measuring weight of an operating vehicle according to the present invention has been described above with reference to the accompanying drawings, it is not to be restricted by the embodiments but only by the appended claims. It is to be appreciated that those skilled in the art can change or modify the embodiments without departing from the scope and spirit of the present invention.

## Claims

1. An operating vehicle weight measurement device for measuring weight of an operating vehicle using data acquired through a variety of sensors of the vehicle, the operating vehicle weight measurement device 10 comprising:

   a connector unit 12 for receiving the vehicle data through a data cable connected to a DLC 11 of the vehicle;
   a control unit 13 provided with a microprocessor for operating and processing the data input through the connector unit 12;
   a display unit 14 for outputting information input into the control unit 13 and a software version on a screen;
   a software setting unit 15 for inputting base information on the vehicle and updating and controlling logic;
   a Bluetooth or WiFi transmission unit 16 connected to a wireless communication module to transmit data output from the control unit 13 and to receive data from outside;
   a flash memory unit 17 for storing data collected in the control unit 13 and a result of operation;
   a tilt sensor connector unit 18 for receiving data through a tilt sensor which measures a gradient of a road and transferring the data to the control unit 13; and
   a warning unit 19 for recognizing an error in the data input into or output from the control unit 13 or an operation error.

2. The device according to claim 1, wherein the data transferred to the connector unit 12 through the DLC 11 of the vehicle is transmitted in a CAN or K-Line method using a vehicle trouble diagnostic standard protocol.

3. An operating vehicle weight measurement algorithm comprising:

   a data acquisition step of acquiring data through claim 1 or 2;
   a driving force calculation step of calculating a driving force of an operating vehicle using the data acquired through the data acquisition step;
   a total running resistance calculation step of calculating a variety of resistances generated when the operating vehicle drives, using the data acquired through the data acquisition step; and
   a vehicle weight calculation step of calculating a weight of the operating vehicle using the data obtained through the driving force calculation step and the total running resistance calculation step.

4. The algorithm according to claim 3, wherein the driving force calculation step obtains equation 3 for calculating a new driving force P by putting equation 2 for calculating a vehicle speed into existing equation 1 for calculating a driving force,

(Equation 1)

$$P = (I_s \times I_f \times T \times \eta)/r \ (kg_f)$$

(Equation 2)

$$V = (2\pi r \times n \times 60)/(I_s \times I_f \times 1000) \ (km/h)$$

(Equation 3)

$$P = (2\pi \times n \times 60 \times T \times \eta)/(V \times 1000) = (0.38 \times n \times T \times \eta)/V$$
$(kg_f)$, wherein

$I_s$ denotes a gear ratio of a transmission in each gear stage, $I_f$ denotes a final reduction gear ratio of a transmission, T denotes an engine torque ($kg_f \cdot m$), $\eta$ denotes power transmission efficiency, r denotes a dynamic loaded radius of a tire (m), n is 3.14, and n denotes revolutions of an engine (rpm), and in the equation 3, V and n are confirmed by a signal value transferred through the DLC.

5. The algorithm according to claim 3, wherein the total running resistance calculation step obtains equation 4 for calculating a rolling resistance generated by friction between a road surface and a tire, equation 5 for calculating an air resistance generated by a shape of the vehicle and friction of air, equation 6 for calculating a gradient resistance generated by a gradient of a road, and equation 7 for calculating an acceleration resistance generated when the vehicle accelerates, and then equation 8 for calculating a new total running resistance $R_T$ by adding the rolling resistance, the air resistance, the gradient resistance and the acceleration resistance is obtained,

(Equation 4)

$$R_r = \mu_r \times W \ (kg_f)$$

(Equation 5)

$$R_r = \{\mu_a \times A \times (V/3.6)^2\}/9.81 = 0.0079 \times \mu_a \times A \times V^2 \ (kg_f)$$

(Equation 6)

$$R_g = Sin\theta \times W \ (kg_f)$$

(Equation 7)

$$R_i = (a/g) \times W \times (1+\varepsilon) \ (kg_f)$$

(Equation 8)

$$R_T = R_r + R_a + R_g + R_i \ (kg_f) = (\mu_r \times W) + (0.0079 \times \mu_a \times A \times V^2) + (Sin\theta \times W) + (a/g) \times W \times (1+\epsilon) \ (kg_f), \text{ wherein}$$

$\mu_r$ denotes a rolling resistance coefficient, W denotes a weight of a vehicle ($kg_f$), $\mu_a$ denotes an air resistance coefficient ($kg/m^3$), A denotes a total projection area of a vehicle ($m^2$), $sin\theta$ denotes a gradient of a road measured using a gyro sensor, a denotes acceleration of a vehicle ($m/s^2$), g denotes acceleration of gravity ($9.81m/s^2$), and $\epsilon$ denotes an equivalent weight ratio of a rotating part.

6. The algorithm according to claim 3, wherein the step of calculating a weight of the vehicle by calculating the driving force and a running resistance obtains equation 10 for calculating the weight W of the vehicle using equation 9 in which the driving force and a total running resistance $R_T$ are calculated to be equal,

(Equation 9)

$$P = R_T$$

$$(0.38 \times n \times T \times \eta)/V = (\mu_r \times W) + (0.0079 \times \mu_a \times A \times V^2) + (Sin\theta \times W) + (a/g) \times W \times (1+\epsilon) \ (kg_f)$$

(Equation 10)

$$W = \{(0.358 \times n \times T) - (0.0079 \times \mu_a \times A \times V^3)\}/\{(\mu_r \times V) + (Sin\theta \times V) + (0.105 \times a \times V)\} \ (kg_f).$$

7. The algorithm according to claim 4 or 6, wherein the engine torque T is calculated using equation 11,

(Equation 11)

$$T = \{25290 \times \eta_h \times q \times (0.95 \text{ when an air conditioner is in operation, or } 1.00 \text{ when the air conditioner is not in operation}) \times (\text{the number of data measured per second})\}/n \ (kg_f \cdot m),$$

wherein
$\eta_h$ denotes thermal efficiency of an engine, and q denotes fuel consumption (cc).

8. The algorithm according to claim 6, wherein when the vehicle uses an automatic transmission, the weight W of the vehicle is calculated using equation 12,

(Equation 12)

$$W = \{(0.358 \times n \times T \times \tau) - (0.0079 \times \mu_a \times A \times V^3)\}/\{(\mu_r \times V)$$

$$+ (Sin\theta \times V) + (0.105 \times a \times V)\} (kg_f),$$

wherein

$\tau$ denotes a boosting force of a torque converter.

9. An operating vehicle weight measurement device 100 comprising:

a lower case 110 including a lower inclined section 111 on a front side and an accommodation space 112 inside thereof;

an upper case 120 coupled on a top of the lower case 110, wherein an upper inclined section 121 having a mounting groove 122 is formed on a front side, and mounting protrusion units 123 for fixedly mounting the operating vehicle weight measurement device on the vehicle are prominently formed on a top surface to be spaced apart from each other in a length direction;

a PCB board 130 horizontally mounted in the accommodation space 112 of the lower case 110, wherein PCB connection units 131 are formed at both sides, and components for performing a measurement function are mounted on top and bottom surfaces;

a display unit 140 mounted on the mounting groove 122 of the upper case 120, connected to the PCB board 130, and displaying input and transfer information; and

a handling unit 150 mounted on the upper inclined section 121 of the upper case 120, connected to the PCB board 130, and controlling input of vehicle information and update of logic.

10. The device according to claim 9, wherein the PCB board 130 selectively further includes a transmission unit 132 for transmitting or inputting output data, a flash memory unit 133 for storing collected data and an operation result, a tilt sensor connector unit 134 for receiving data through a tilt sensor which measures a gradient of a road, and a warning unit 135 for recognizing an error in the input or output data or an operation error, and connection mounting grooves 117 and 124 are further formed in the cases 110 and 120 so that a selected configuration may be connectedly mounted on the PCB board 130.

11. The device according to claim 9, wherein fixtures 160 fixedly coupled to the lower case 110, the upper case 120 or the upper and lower cases 110 and 120 and adjusting a height of the PCB board 130 are further included at positions corresponding to the PCB connection units 131 of the PCB board 130.

12. The device according to claim 11, wherein in a coupling structure of the cases 110 and 120, the PCB board 130 and the fixture 160, the fixture 160 having fixture coupling holes 161 is detachably coupled to the PCB connection unit 131 of the PCB board 130, and fixing projections 113 and 125 insertedly coupled to the fixture coupling holes 161 are formed inside the cases 110 and 120 corresponding to the fixture 160, wherein the fixing projections 113 and 125 of the cases 110 and 120 are formed in a shape of an arrowhead and insertedly fixed to fixture coupling grooves 162 formed inside the fixture coupling holes 161.

13. The device according to claim 9, wherein a coupling structure of the cases 110 and 120 and the PCB board 130 is configured such that the lower inclined section 111 is insertedly coupled to the upper inclined section 121, wherein the lower case 110 includes a location projection unit 114 prominently formed at a position corresponding to the PCB connection unit 131 of the PCB board 130 and a connection projection 115 formed at an end point of the location projection unit 114 and inserted into the PCB connection unit 131, and the upper case 120 includes a reception unit 126 formed on a rear surface, for wrapping and fixing a connector 136 positioned on the rear surface of the PCB board 130, wherein the lower inclined section 111 and the upper inclined section 121 are insertedly coupled to each other by a coupling depression 116 formed at one end of a contacting point and a coupling projection 127 formed at an opposite end corresponding to the coupling depression 116, and the upper case 120 and the connector 136 are fixed to each other by an engagement depression 128 and an engagement projection 137 forming at a contacting point.

[Fig. 1]

[Fig. 2]

[Fig. 3]

[Fig. 4]

[Fig. 5]

[Fig. 6]

[Fig. 7]

[Fig. 8]

[Fig. 9]

140

150

# EP 2 631 614 A1

## INTERNATIONAL SEARCH REPORT

International application No.

**PCT/KR2011/005416**

**A. CLASSIFICATION OF SUBJECT MATTER**

***G01G 19/08(2006.01)i, G01G 19/02(2006.01)i***

According to International Patent Classification (IPC) or to both national classification and IPC

**B. FIELDS SEARCHED**

Minimum documentation searched (classification system followed by classification symbols)
G01G 19/08; G01G 23/00; F16H 59/52; G01G 19/12; G01G 19/03

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: truck, weight, load, measuring

**C. DOCUMENTS CONSIDERED TO BE RELEVANT**

| Category* | Citation of document, with indication, where appropriate, of the relevant passages | Relevant to claim No. |
|---|---|---|
| A | JP 2002-333365 A (TOYOTA CENTRAL RES & DEV LAB INC et al.) 22 November 2002 See abstract; paragraphs [0001]-[0026]; figure 1. | 1-13 |
| A | JP 2007-271282 A (ISUZU MOTORS LTD) 18 October 2007 See paragraphs [0001]-[0031]; claims 1-5; figures 3-4. | 1-13 |
| A | JP 06-080410 B2 (ISHIDA SCALES MFG. CO. LTD.) 12 October 1994 See column 2, line 12-column 6, line 5; figures 1-4. | 1-13 |
| A | JP 08-122131 A (HINO SHATAI KOGYO KK et al.) 17 May 1996 See abstract; paragraphs [0005]-[0041]; figures 1-3. | 1-13 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 FEBRUARY 2012 (06.02.2012) | **10 FEBRUARY 2012 (10.02.2012)** |

| Name and mailing address of the ISA/KR | Authorized officer |
|---|---|
| Korean Intellectual Property Office Government Complex-Daejeon, 139 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2011/005416**

| Patent document cited in search report | Publication date | Patent family member | Publication date |
|---|---|---|---|
| JP 2002-333365 A | 22.11.2002 | JP 3448573 B2 | 22.09.2003 |
| JP 2007-271282 A | 18.10.2007 | NONE | |
| JP 06-080410 B2 | 12.10.1994 | JP 61-288123 A | 18.12.1986 |
| JP 08-122131 A | 17.05.1996 | NONE | |

Form PCT/ISA/210 (patent family annex) (July 2009)